(19) Europäisches Patentamt
European Patent Office
Office européen des brevets

(11) **EP 3 394 588 B1**

(12) **EUROPÄISCHE PATENTSCHRIFT**

(45) Veröffentlichungstag und Bekanntmachung des Hinweises auf die Patenterteilung:
**03.05.2023   Patentblatt 2023/18**

(21) Anmeldenummer: **16825374.8**

(22) Anmeldetag: **20.12.2016**

(51) Internationale Patentklassifikation (IPC):
***G01M 3/32*** *(2006.01)*

(52) Gemeinsame Patentklassifikation (CPC):
**G01M 3/3218**

(86) Internationale Anmeldenummer:
**PCT/EP2016/081867**

(87) Internationale Veröffentlichungsnummer:
**WO 2017/108754 (29.06.2017 Gazette 2017/26)**

(54) **GROBLECKMESSUNG EINES INKOMPRESSIBLEN PRÜFLINGS IN EINER FOLIENKAMMER**

GROSS LEAK MEASUREMENT IN AN INCOMPRESSIBLE TEST ITEM IN A FILM CHAMBER

MESURE APPROXIMATIVE DE FUITE D'UN ÉCHANTILLON INCOMPRESSIBLE DANS UNE CHAMBRE À FILM

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **21.12.2015   DE 102015226360**

(43) Veröffentlichungstag der Anmeldung:
**31.10.2018   Patentblatt 2018/44**

(73) Patentinhaber: **Inficon GmbH**
**50968 Köln (DE)**

(72) Erfinder:
• **DECKER, Silvio**
 **50968 Köln (DE)**

• **ROLFF, Norbert**
 **50968 Köln (DE)**

(74) Vertreter: **dompatent von Kreisler Selting Werner - Partnerschaft von Patent- und Rechtsanwälten mbB**
**Deichmannhaus am Dom**
**Bahnhofsvorplatz 1**
**50667 Köln (DE)**

(56) Entgegenhaltungen:
**US-A- 6 082 184        US-A1- 2001 003 917**
**US-A1- 2006 277 975**

EP 3 394 588 B1

**Beschreibung**

Die Erfindung betrifft ein Verfahren zur Detektion eines Groblecks an einem zumindest zu einem Teil inkompressiblen Prüfling in einer Folienkammer.

Bei einer Folienkammer handelt es sich um eine besondere Form einer Prüfkammer zur Aufnahme eines auf Dichtheit zu prüfenden Prüflings. Die Folienkammer zeichnet sich dadurch aus, dass mindestens ein Wandbereich aus einem flexiblen Material (Folie) besteht. Ein auf Dichtheit zu prüfender Prüfling wird in das Innere der Folienkammer gegeben und die Folienkammer anschließend evakuiert. Beim Evakuieren der Folienkammer wird die Luft aus der Folienkammer im Bereich außerhalb des Prüflings gesogen, wodurch sich die flexible Folienkammerwand an den Prüfling anschmiegt. Eine besonders geeignete Folienkammer besteht aus zwei gegeneinander gelegten, den Prüfling umschließenden Folienlagen, die in deren Randbereich gasdicht miteinander verbunden werden. Beim Evakuieren der Folienkammer wird die Folie bis auf verbleibende Totvolumina an den Prüfling herangesogen. Mit Hilfe eines Drucksensors wird anschließend der Druckverlauf innerhalb der Folienkammer im Bereich außerhalb des Prüflings gemessen. Wenn Gas durch ein Leck im Prüfling aus dem Prüfling austritt dient der entsprechend gemessene Druckanstieg als Hinweis auf ein Leck. Die Leckrate kann dabei anhand des Druckanstiegs gemessen werden. Hierzu muss das Folienkammervolumen, das heißt das von der Folienkammer umschlossene Innenvolumen, bekannt sein. Das sich nach dem Evakuieren einstellende Folienkammervolumen hängt von der Größe und Form des Prüflings ab. Durch ein nicht perfektes Anschmiegen der Folie an den Prüfling entstehen Totvolumina.

Die Folienkammer gibt selbst Gas in das Folienkammervolumen ab, zum Beispiel durch aus der Folienkammerwand ausgasende Bestandteile. Daraus resultiert ein Druckanstieg (Offset-Druckanstieg) innerhalb der Folienkammer. Dieser Offset-Druckanstieg und die Totvolumina der Folienkammer beeinflussen die gemessene Leckrate. Daraus resultiert ein Fehler in der Leckratenbestimmung. Herkömmlicherweise erfolgt zur Vermeidung dieses Fehlers eine vorangehende Messung mit einem dichten Prüfling, um den Offset-Druckanstieg und die Totvolumina zu erfassen. Dabei können die Totvolumina allenfalls nur durch eine produktabhängige Kalibrierung vor der eigentlichen Messung erfasst werden. Sobald der Prüfling gewechselt wird, zum Beispiel bei einem Stichprobentest oder sobald sich die Anzahl der Prüflinge ändert, ist eine vorangehende produktabhängige Kalibrierung ungenau.

In der deutschen Patentanmeldung Nr. 10 2014 219 481.4, deren Inhalt durch Bezugnahme in die vorliegende Anmeldung aufgenommen wird, wird beschrieben, den Innenraum der Folienkammer, das heißt das von der Folienkammer umschlossene Folienkammervolumen, gasleitend mit einem von einer Kalibrierkammer umschlossenen Kalibriervolumen zu verbinden. Zwischen der Folienkammer und der Kalibrierkammer ist ein Kalibrierventil vorgesehen, mit welchem der Gasleitungsweg zwischen der Folienkammer und der Kalibrierkammer beim Evakuieren der Folienkammer verschlossen ist. Nachdem die Folienkammer evakuiert worden ist und während die Druckänderung innerhalb der Folienkammer mit dem Drucksensor gemessen wird, wird das Kalibrierventil geöffnet, wobei beim Öffnen des Kalibrierventils der Druck innerhalb der Kalibrierkammer größer oder kleiner ist als innerhalb der evakuierten Folienkammer.

Nach dem Öffnen des Kalibrierventils strömt Gas aus der Kalibrierkammer in die Folienkammer (oder umgekehrt), was zu einem sprunghaften Druckanstieg oder -abfall innerhalb der Folienkammer führt. Diese Druckänderung kann als abrupter Druckhub bezeichnet werden. Der Druckhub ist dabei abhängig von dem Folienkammervolumen. Im Falle einer leeren Folienkammer, das heißt ohne Prüfling, ist dies das gesamte Innenvolumen der Folienkammer. Wenn ein Prüfling in der Folienkammer enthalten ist, ist dies das verbleibende Volumen innerhalb der Folienkammer im Bereich außerhalb des im Wesentlichen dichten Prüflings. Anhand des Druckhubs ist es möglich, bei jeder Messung eines Prüflings das jeweils aktuelle Folienkammervolumen zu bestimmen und damit die Leckrate aus dem Druckanstieg exakt zu ermitteln. Eine vorangehende separate Kalibriermessung ist dann nicht erforderlich.

Es wird beschrieben, dass das Folienkammervolumen aus der Differenz des Drucks im Kalibriervolumen vor Öffnen des Kalibrierventils (bekannter, vorzugsweise atmosphärischer Druck) und dem Druck innerhalb der Folienkammer nach dem Öffnen des Kalibrierventils bestimmt wird.

Unter einem zumindest teilweise inkompressiblen Prüfling wird ein Prüfling verstanden, bei dem es sich beispielsweise um ein zumindest zu einem Teil starren Prüfkörper oder einen stabile Gegenstände enthaltenden Prüfkörper, wie zum Beispiel eine Verpackung mit darin enthaltenen Lebensmitteln, handeln kann. Bei derartigen Prüflingen besteht eine Besonderheit darin, dass sich deren äußere Erscheinung im Falle eines großen Lecks nicht im gleichen Maße ändert, wie bei einem kompressiblen, das heißt formschlaffen, vollständig oder weitgehend komprimierbaren Prüfling. Inkompressible Prüflinge können auch als formstabil bezeichnet werden. Gerade im Falle eines starren Prüflings verändert dieser seine äußere Form auch bei vollständiger Evakuierung nicht. Gerade grobe Leckagen werden bei solchen zumindest teilweise inkompressiblen Prüflingen nicht mit ausreichender Genauigkeit erkannt, da während der Evakuierungsphase sämtliches im Prüfling enthaltene Gas herausgesogen wird und so kein Gas bei der Messung mehr verbleibt, um einen messbaren Druckanstieg zu erzeugen.

US 6 082 184 A und US 2001/003917 A1 beschreiben jeweils ein Verfahren zur Lecksuche und eine Lecksuchvorrichtung.

US 2006/277975 A1 offenbart ein System und ein Verfahren zur Dichtheitsprüfung von Verpackungen.

Der Erfindung liegt die Aufgabe zugrunde, eine verbesserte Grobleckmessung an einem zumindest teilweise inkompressiblen Prüfling in einer Folienkammer zu schaffen.

Das erfindungsgemäße Verfahren wird definiert durch die Merkmale von Anspruch 1.

Die Grobleckmessung erfolgt unter Vergleich der Druckänderung zwischen dem Folienkammerinnendruck vor deren gasleitender Verbindung mit der Kalibrierkammer und dem Folienkammerinnendruck nach Herstellen der gasleitenden Verbindung zwischen der Folien- und der Kalibrierkammer im Falle einer leeren Folienkammer, in der kein Prüfling enthalten ist, mit der entsprechenden Druckdifferenz im Falle eines in der Folienkammer enthaltenen, zumindest teilweise inkompressiblen Prüflings. Im Falle eines grob undichten Prüflings, also eines ein Grobleck aufweisenden Prüflings, ist die Druckdifferenz geringer als im Falle einer leeren Folienkammer oder im Falle eines dichten Prüflings oder eines Prüflings mit lediglich geringer Leckrate.

Typische Werte für das Innenvolumen der Kalibrierkammer können zwischen 1 cm$^3$ und 10 cm$^3$ mit einem Druck innerhalb der Prüfkammer von circa 1000 bar (atmosphärischer Druck) vor Öffnen des Kalibrierventils liegen. Da die Kalibrierkammer mit Umgebungsluft gefüllt werden kann, kann es notwendig sein, den aktuellen Luftdruck mit einem geeigneten Druckmessinstrument zu bestimmen und die sich nach Herstellen der Verbindung zwischen Folienkammer und Kalibrierkammer einstellenden Druckdifferenz entsprechend zu korrigieren.

Die Kalibrierkammer kann mit einem Prüfleck versehen sein, dessen Leckrate bekannt ist. Aus dem sich aus der Leckrate des Prüflecks ergebenden Druckanstieg kann auf das Innenvolumen eines grob undichten starren Prüflings geschlossen werden.

Zur schnelleren Leckagemessung kann der sich nach Öffnen des Kalibrierventils einstellende Druckverlauf in der Folienkammer mathematisch anhand einer Exponentialfunktion extrapoliert werden. Dies ist insbesondere von Vorteil, um die Druckdifferenz zwischen dem Folienkammerinnendruck vor Öffnen des Kalibrierventils und bei vollständigem Druckausgleich bei geöffnetem Kalibrierventil zu erfassen. Dies ist insbesondere dann von Vorteil, wenn große Prüflinge den Gasfluss innerhalb der Folienkammer behindern und der Druckausgleich dadurch länger dauert als im Leerzustand der Folienkammer.

Nach dem Öffnen des Kalibrierventils ergibt sich ein Druckausgleich zwischen dem Kalibriervolumen (Innenvolumen der Kalibrierkammer), welches zunächst mit Umgebungsdruck beaufschlagt ist, und dem Folienkammervolumen, welches einen deutlich geringeren Druck aufweist. Je nach Beschaffenheit und Größe des Prüflings findet dieser Druckausgleich schneller oder langsamer statt. Der zu erwartende Enddruck im Falle des erfolgten Druckausgleichs kann anhand einer Exponentialfunktion mathematisch aus mindestens zwei, vorzugsweise mindestens drei aufeinander folgenden Messwerten des Folienkammerdrucks extrapoliert werden.

Im Folgenden wird anhand der Figuren ein Ausführungsbeispiel der Erfindung näher erläutert. Es zeigen:

Fig. 1    eine schematische Darstellung in einem ersten Betriebszustand,

Fig. 2    den Druckverlauf im ersten Betriebszustand,

Fig. 3    die Ansicht nach Fig. 1 in einem zweiten Betriebszustand,

Fig. 4    den Druckverlauf im zweiten Betriebszustand,

Fig. 5    die Ansicht nach Fig. 1 in einem dritten Betriebszustand,

Fig. 6    den Druckverlauf im dritten Betriebszustand und

Fig. 7    eine Detailansicht des Druckverlaufs nach Figur 6.

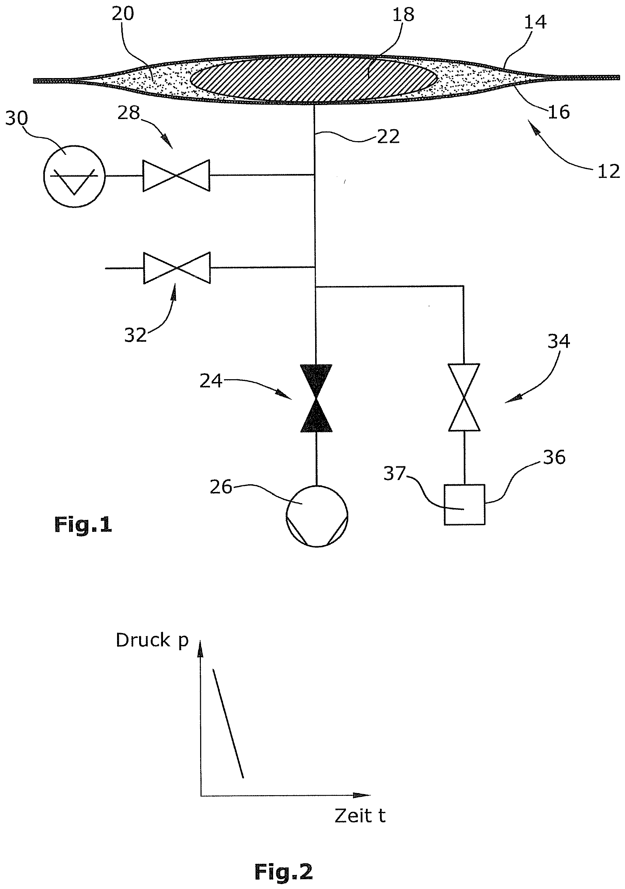

Die Folienkammer 12 besteht aus zwei Folienlagen 14, 16, die einen Prüfling 18 umschließen und im Randbereich des Prüflings 18 gasdicht miteinander verbunden sind. Die Folienlagen 14, 16 umschließen ein Folienkammervolumen 20 im Inneren der Folienkammer 12. In Figur 1 ist das Folienkammervolumen 20 das Volumen innerhalb der Folienkammer 12 im Bereich außerhalb des Prüflings 18.

Über eine Gasleitung 22 ist das Innere der Folienkammer 12 gasleitend über ein Evakuierungsventil 24 mit einer Vakuumpumpe 26, über ein Messventil 28 mit einem Drucksensor 30, über ein Belüftungsventil 32 mit der die Folienkammer 12 umgebenden Atmosphäre und über ein Kalibrierventil 34 mit einer Kalibrierkammer 36 verbunden.

Die Kalibrierkammer 36 umschließt ein Kalibriervolumen, das initial mit Luft unter atmosphärischem Druck gefüllt ist. Das Kalibrierventil 34 ist initial geschlossen. In den Figuren ist der geöffnete Zustand eines Ventils durch ein gefüllt dargestelltes Ventil dargestellt und der geschlossene Zustand eines Ventils ist durch ein nicht gefüllt dargestelltes Ventil dargestellt. In dem ersten Betriebszustand gemäß Figur 1 sind folglich das Messventil 28, das Belüftungsventil 32 und das Kalibrierventil 34 geschlossen. Das Evakuierungsventil 24 ist hingegen geöffnet. In dem in Figur 1 dargestellten ersten Betriebszustand befindet sich der Prüfling 18 innerhalb der gasdicht verschlossenen Folienkammer 12 während die Vakuumpumpe 26 die Folienkammer 12 bei geöffnetem Evakuierungsventil 24 über die Gasleitung 22 evakuiert.

Figur 2 zeigt den Druckverlauf, der sich während des Evakuierens innerhalb der Folienkammer 12 einstellt. Bei geöffnetem Messventil 28 würde der Drucksensor 30 den in Figur 2 dargestellten Druckverlauf messen. In Figur 1 ist beim Evakuieren der Folienkammer 12 das Messventil 28 jedoch geschlossen, um den Drucksensor 30 nicht zu beschädigen.

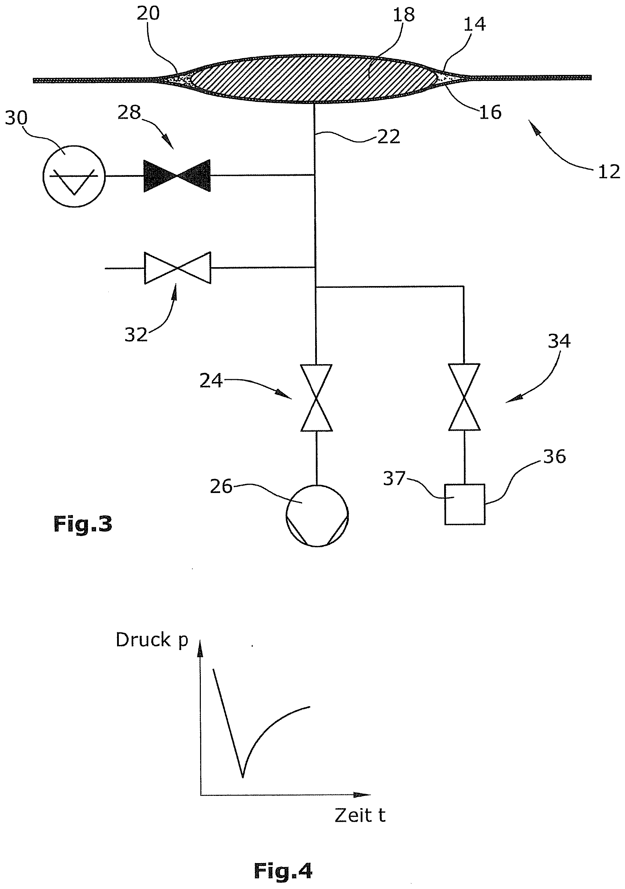

Figur 3 zeigt den nachfolgenden Betriebszustand nach dem Evakuieren der Folienkammer 12. Das Evakuierungsventil 24 ist geschlossen (nicht gefüllt dargestellt) und das Messventil 28 ist geöffnet (gefüllt dargestellt). Das hermetisch verschlossene Folienkammervolumen 20 ist dadurch mit dem Drucksensor 30 verbunden. Wie in Figur 4 dargestellt ist, misst der Drucksensor 30 einen Druckanstieg innerhalb der Folienkammer 12 über der Zeit t. Dieser Druckanstieg kann zum einen aus einem Leck in dem Prüfling 18 und zum anderen aus einem Offset-Druck resultieren. Bei dem Offset-Druckanstieg handelt es sich um einen Druckanstieg, der nicht durch ein Leck in dem Prüfling 18 entsteht, sondern durch andere physikalische Effekte, wie zum Beispiel aus der Folienkammerwand ausgasende Gasmoleküle.

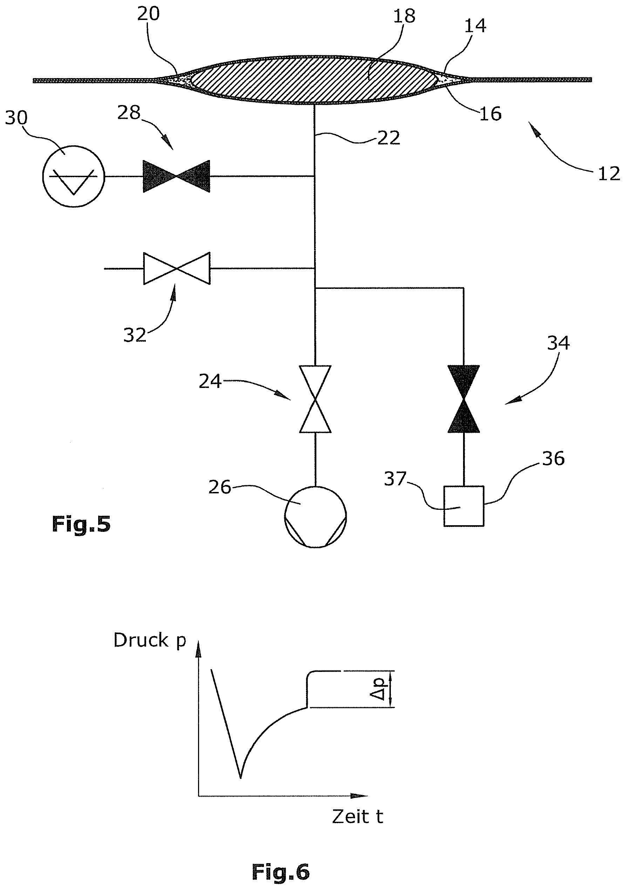

Nach dem Evakuieren der Folienkammer 12 (erster Betriebszustand) und dem Öffnen des Messventils 28 (zweiter Betriebszustand) wird nun auch noch das Kalibrierventil 34 geöffnet. Dieser dritte Betriebszustand ist in Figur 5 dargestellt. Durch das geöffnete Kalibrierventil 34 strömt die Luft aus der Kalibrierkammer 36 über die Gasleitung 22 in die Folienkammer 12. Aufgrund des großen Druckunterschiedes zwischen dem Vakuum innerhalb der Folienkammer 12 und dem atmosphärischen Druck innerhalb der Kalibrierkammer 36 steigt der Druck in der Folienkammer 12 nach dem Öffnen des Kalibrierventils 34 abrupt an.

Dieser Druckhub $\Delta p$ ist in Figur 6 dargestellt und wird von dem Drucksensor 30 gemessen. Der Druckhub $\Delta p$ ist die Differenz aus dem Druck $p_G$ innerhalb der Folienkammer 12 nach dem Öffnen des Kalibrierventils 34 und dem Druck $p_F$ innerhalb der Folienkammer 12 vor dem Öffnen des Kalibrierventils 34:

$$\Delta p = (p_G - p_F).$$

Dadurch, dass die Gesamtgasmenge in der Folienkammer 12 und in der Kalibrierkammer 36 vor und nach dem Öffnen des Kalibrierventils erhalten bleibt, gilt

$$p_G (V_F + V_V) = p_F V_F + p_V V_V,$$

wobei

$P_G$: Druck innerhalb der Folienkammer 12 nach dem Öffnen des Kalibrierventils 34,

$V_F$: zu bestimmendes Folienkammervolumen 20,

$V_V$: Kalibriervolumen 37 innerhalb der Kalibrierkammer 36 (im Bereich zwischen 1/1000 und 1/10 des Folienkammervolumens ohne Prüfling) und

$P_V$: Druck innerhalb der Kalibrierkammer 36 vor dem Öffnen des Kalibrierventils 34 (atmosphärischer Druck, circa 1 bar).

Daraus lässt sich anhand des Druckhubs $\Delta p = p_G - p_F$ das Folienkammervolumen 20 berechnen als:

$$V_F = V_V \frac{(p_v - p_G)}{(p_G - p_F)} = V_V \frac{(p_V - p_G)}{\Delta p}.$$

Als Druck $p_G$ wird bei der Betrachtung des Druckhubs $\Delta p$ vorzugsweise der sich einstellende Enddruck $p_{End}$ betrachtet. Der Enddruck $p_{End}$ ist derjenige Druck, der sich bei erfolgtem Druckausgleich zwischen Folienkammer 12 und Kalibrierkammer 36, das heißt am Ende des Einschwingvorgangs des Folienkammerdrucks nach dem Öffnen des Kalibrierventils 34 einstellt.

Das Innenvolumen $V_{Innen}$ der Folienkammer 12 bei in der Folienkammer enthaltenem Prüfling 18, wie zum Beispiel einem zumindest teilweise inkompressiblen oder gar starren und/oder formstabilen Prüfling, kann berechnet werden als

$$V_{Innen} = V_{leer}\left(\frac{\Delta p_{leer}(p_V - p_{G2})}{\Delta p_{prüfling}(p_V - p_{G1})} - 1\right)$$

und wenn die sich einstellenden Enddrücke $P_{G1}$ und $P_{G2}$ nach dem Druckausgleich klein gegenüber dem Druck im Kalibriervolumen $p_V$ sind als

$$V_{Innen} \approx V_{leer} \times \left(\frac{\Delta p_{leer}}{\Delta p_{prüfling}} - 1\right),$$

wobei

$V_{Innen}$:      Innenvolumen der Folienkammer 12 mit enthaltenem Prüfling 18,

$V_{leer}$:      Innenvolumen der leeren Folienkammer 12 ohne Prüfling 18,

$\Delta p_{leer}$:      Druckdifferenz zwischen dem Druck in der Folienkammer 12 vor dem Verbinden mit der Kalibrierkammer 36 und nach dem Verbinden mit der Kalibrierkammer 36 bei leerer Folienkammer 12,

$\Delta p_{Prüfling}$:      Druckdifferenz zwischen dem Druck in der Folienkammer 12 vor dem Verbinden mit der Kalibrierkammer 36 und nach dem Verbinden mit der Kalibrierkammer 36 bei in der Folienkammer 12 enthaltenem Prüfling,

$P_{G1}$:      der sich einstellende Enddruck bei einer leeren Kammer nach dem Verbinden des Kalibriervolumens mit der Folienkammer und

$P_{G2}$:      der sich einstellende Enddruck bei einer mit einem Prüfling gefüllten Kammer nach dem Verbinden des Kalibriervolumens mit der Folienkammer.

Das Innenvolumen $V_{leer}$ wird durch eine einmalige Kalibrierung mit einem bekannten Innenvolumen bestimmt. Dazu wird eine Messung mit einer leeren Messung durchgeführt und eine Messung mit einem bekannten Innenvolumen $V_{Kal}$. Das Innenvolumen der Kammer bestimmt sich dann aus:

$$V_{leer} = \left(\frac{V_{kal}}{\left(\frac{\Delta p_{leer}(p_V - p_{G2})}{\Delta p_{prüfling}(p_V - p_{G1})} - 1\right)}\right),$$

oder wenn $P_{G1}$, $P_{G2} \ll p_v$

$$V_{leer} = \left(\frac{V_{kal}}{\left(\frac{\Delta p_{leer}}{\Delta p_{prüfling}} - 1\right)}\right)$$

wobei

$V_{Kal}$:      ein bekanntes Kalibriervolumen ist. Die Größe des Kalibriervolumens sollte zwischen 1/5 und 1/20 des Innenvolumens der leeren Kammer $V_{leer}$ betragen.

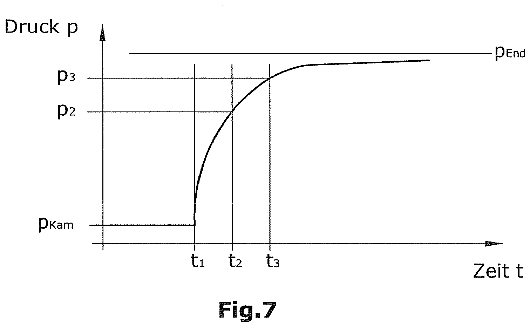

Figur 7 zeigt den Einschwingvorgang des Drucks p während des Druckausgleichs bei geöffnetem Kalibrierventil 34. Wenn als Druckhub $\Delta p$ die Druckdifferenz $P_{End} - P_{Kam}$ betrachtet wird, das heißt die Differenz aus dem Folienkammerinnendruck am Ende des Einschwingvorgangs und dem Folienkammerinnendruck vor dem Einschwingvorgang, kann der Druckverlauf p(t) in Abhängigkeit von der Zeit t während des Einschwingvorgangs mathematisch durch die Formel

$$p(t) = (p_{End} - p_{Kam}) \times (1 - e^{-t/Tau}) + p_{Kam},$$

beschrieben werden, wobei

p(t): momentaner Druck zum Zeitpunkt t,

$p_{Kam}$: Druck in der Folienkammer (12) vor Herstellen der gasleitenden Verbindung zwischen der Folien- und der Kalibrierkammer (36),

p2: Druck in der Folienkammer (12) zu einem Zeitpunkt t2 nach Herstellen der Verbindung zwischen der Folien- und der Kalibrierkammer (36),

p3: Druck in der Folienkammer (12) zu einem Zeitpunkt t3 nach dem Zeitpunkt t2,

$p_{End}$: Enddruck in der Folienkammer (12) nach Verbinden der Folienkammer (12) und der Kalibrierkammer (36), vorzugsweise zum Zeitpunkt t = ∞,

t: Zeit,

Tau: Zeitkonstante des Druckeinschwingvorgangs nach Verbinden der Folienkammer (12) mit der Kalibrierkammer (36).

Anhand mindestens zweier aufeinander folgender Druckmesswerte p2, p3, vorzugsweise mindestens drei aufeinander folgender Druckmesswerte p1, p2, p3, kann der Druckverlauf p(t) durch die obige Formel extrapoliert werden. Ein Messen des Druckverlaufs und ein Abwarten, bis sich der Enddruck $p_{End}$ bei erfolgtem Druckausgleich eingestellt hat, ist dann nicht erforderlich. Vielmehr kann bereits vor erfolgtem Druckausgleich der Folienkammerinnendruck extrapoliert werden.

Für gleiche Abstände zwischen den Zeitpunkten t1, t2 und t2, t3, wobei t1 der Zeitpunkt ist, zu dem das Kalibrierventil 34 geöffnet wird und t2 zwischen t1 und t3 liegt, kann der Enddruck $p_{End}$ berechnet werden als

$$p_{End} = (p2 \times p2 - p_{Kam} \times p2) / (2 \times p2 - p_{Kam} - p3).$$

Damit ist eine Berechnung des sich einstellenden Enddrucks $p_{End}$ innerhalb der Folienkammer möglich, bevor sich dieser Enddruck bei erfolgtem Druckausgleich einstellt. Anhand des derart berechneten Enddrucks können die oben beschriebenen Druckdifferenzen ermittelt und miteinander verglichen werden, um ein Grobleck an einem zumindest teilweise inkompressiblen Prüfling zu erkennen.

**Patentansprüche**

**1.** Verfahren zur Grobleckmessung eines zumindest teilweise inkompressiblen Prüflings (18) in einer mindestens einen flexiblen Wandbereich aufweisenden Folienkammer (12), die gasleitend mit einem Drucksensor (30), einer Vakuumpumpe (26) und über ein Kalibrierventil (34) mit einer ein Kalibriervolumen (37) umschließenden Kalibrierkammer (36) verbunden ist, mit den Schritten:

Evakuieren der Folienkammer (12) im leeren Zustand ohne Prüfling (18),
Messen eines ersten Druckverlaufs innerhalb der Folienkammer (12) nach Abschluss des Evakuierens,
gasleitendes Verbinden des Kalibriervolumens (37) mit dem Innenvolumen der Folienkammer (12) während der Messung des ersten Druckverlaufs, wobei ein Druck vor Herstellen der gasleitenden Verbindung und ein Druck bei gasleitender Verbindung mit der Folienkammer (12) gemessen werden und wobei der Druck in der Kalibrierkammer (36) vor dem Verbinden mit der Folienkammer (12) größer oder kleiner ist als der Druck in der Folienkammer (12),

Ermitteln der Druckdifferenz $\Delta p_{leer}$ zwischen dem gemessenen Druck vor Herstellen der gasleitenden Verbindung und dem gemessenen Druck bei gasleitender Verbindung mit der Folienkammer (12) im Falle einer leeren Folienkammer (12) ohne Prüfling (18),

**gekennzeichnet durch** die Schritte:

Einbringen eines Prüflings (18) in die Folienkammer (12),

Evakuieren der den Prüfling (18) enthaltenden Folienkammer (12),

Messen eines zweiten Druckverlaufs innerhalb der den Prüfling (18) enthaltenden Folienkammer (12) nach Abschluss des Evakuierens,

gasleitendes Verbinden des Kalibriervolumens (37) mit dem Innenvolumen der Folienkammer (12) während der Messung des zweiten Druckverlaufs,

wobei ein Druck vor Herstellen der gasleitenden Verbindung und ein Druck bei gasleitender Verbindung mit der Folienkammer (12) gemessen werden und wobei der Druck in der Kalibrierkammer (36) vor dem Verbinden mit der Folienkammer (12) größer oder kleiner ist als der Druck in der Folienkammer (12),

Ermitteln der Druckdifferenz $\Delta p_{Prüfling}$ zwischen dem gemessenen Druck vor Herstellen der gasleitenden Verbindung und dem gemessenen Druck bei gasleitender Verbindung mit der Folienkammer (12) bei in der Folienkammer (12) enthaltenem Prüfling (18),

Vergleichen der Druckdifferenz $\Delta p_{leer}$ mit der Druckdifferenz $\Delta p_{Prüfling}$, wobei im Falle eines ein Grobleck aufweisenden Prüflings (18) die Druckdifferenz $\Delta p_{Prüfling}$ geringer ist als die Druckdifferenz $\Delta p_{leer}$ im Falle einer leeren Folienkammer.

2. Verfahren nach Anspruch 1, **dadurch gekennzeichnet, dass** das Innenvolumen $V_{Innen}$ der Folienkammer (12) mit darin enthaltenem Prüfling (18) berechnet wird aus

$$V_{Innen} = V_{leer}\left(\frac{\Delta p_{leer}\left(p_V - p_{G2}\right)}{\Delta p_{prüfling}\left(p_V - p_{G1}\right)} - 1\right)$$

oder, wenn $P_{G1}$, $p_{G2} \ll p_v$

$$V_{Innen} \approx V_{leer} \times \left(\frac{\Delta p_{leer}}{\Delta p_{prüfling}} - 1\right),$$

wobei

$V_{Innen}$: Innenvolumen der Folienkammer (12) mit enthaltenem Prüfling (18),

$V_{leer}$: Innenvolumen der leeren Folienkammer (12) ohne Prüfling (18),

$\Delta p_{leer}$: Druckdifferenz zwischen dem Druck in der Folienkammer (12) vor dem Verbinden mit der Kalibrierkammer (36) und dem Druck in der Folienkammer nach dem Verbinden mit der Kalibrierkammer (36) bei leerer Folienkammer (12),

$\Delta p_{Prüfling}$: Druckdifferenz zwischen dem Druck in der Folienkammer (12) vor dem Verbinden mit der Kalibrierkammer (36) und dem Druck in der Folienkammer nach dem Verbinden mit der Kalibrierkammer (36) bei in der Folienkammer (12) enthaltenem Prüfling (18),

$P_{G1}$: der sich einstellende Enddruck bei einer leeren Folienkammer (12) nach dem Verbinden des Kalibriervolumens (37) mit der Folienkammer und

$p_{G2}$: der sich einstellende Enddruck bei einer mit einem Prüfling (18) gefüllten Folienkammer (12) nach dem Verbinden des Kalibriervolumens (37) mit der Folienkammer.

3. Verfahren nach einem der vorhergehenden Ansprüche, **dadurch gekennzeichnet, dass** das Innenvolumen (20) der leeren Folienkammer (12) ohne Prüfling (18) durch vergleichende Messung einer leeren Folienkammer (12) mit einer Messung mit einem bekannten Innenvolumen $V_{Kal}$ über folgenden Zusammenhang bestimmt wird:

$$V_{leer} = \left( \frac{V_{kal}}{\left( \dfrac{\Delta p_{leer}\left(p_V - p_{G2}\right)}{\Delta p_{prüfling}\left(p_V - p_{G1}\right)} - 1 \right)} \right),$$

oder wenn $P_{G1}$, $P_{G2} \ll p_v$

$$V_{leer} = \left( \frac{V_{kal}}{\left( \dfrac{\Delta p_{leer}}{\Delta p_{prüfling}} - 1 \right)} \right)$$

wobei

$V_{Kal}$: ein bekanntes Kalibriervolumen (37) ist.

4. Verfahren nach dem vorhergehenden Anspruch, **dadurch gekennzeichnet, dass** die Größe des bekannten Kalibriervolumens (37) zwischen 1/5 und 1/20 des Innenvolumens (20) der leeren Folienkammer $V_{leer}$ beträgt

5. Verfahren nach einem der vorhergehenden Ansprüche, **dadurch gekennzeichnet, dass** die Kalibrierkammer (36) mit einem Prüfleck (40) mit vordefinierter Leckrate versehen ist und das Innenvolumen (20) der Folienkammer (12) unter Berücksichtigung des sich einstellenden Druckanstiegs nach dem Verbinden der Folienkammer (12) mit dem Kalibriervolumen (37) ermittelt wird.

6. Verfahren nach einem der vorhergehenden Ansprüche, **dadurch gekennzeichnet, dass** jeweils die Druckdifferenzen zwischen dem Druck vor Herstellen der gasleitenden Verbindung zwischen der Folienkammer (12) und der Kalibrierkammer (36) und dem sich bei gasleitender Verbindung zwischen Folienkammer (12) und Kalibrierkammer (36) einstellenden Enddruck innerhalb der Folienkammer (12) betrachtet werden.

7. Verfahren nach dem vorhergehenden Anspruch, **dadurch gekennzeichnet, dass** der sich einstellende Enddruck innerhalb der Folienkammer (12) bei gasleitender Verbindung zwischen Folienkammer (12) und Kalibrierkammer (36) anhand einer Exponentialfunktion des sich einstellenden Druckverlaufs, die mindestens zwei mit dem Drucksensor (30) gemessene Druckwerte aufweist, extrapoliert wird.

8. Verfahren nach dem vorhergehenden Anspruch, **dadurch gekennzeichnet, dass** zur Extrapolation des sich einstellenden Enddrucks die Formel

$$p(t) = (p_{End} - p_{Kam}) \times (1 - e^{-t/Tau}) + p_{Kam},$$

wobei
$p(t)$: momentaner Druck zum Zeitpunkt t,

$p_{Kam}$: Druck in der Folienkammer (12) vor Herstellen der gasleitenden Verbindung zwischen der Folienkammer (12) und der Kalibrierkammer (36),
$p_{End}$: Enddruck in der Folienkammer (12) nach Verbinden der Folienkammer (12) und der Kalibrierkammer (36),
t: Zeit und
Tau: Zeitkonstante des Druckeinschwingvorgangs nach Verbinden der Folienkammer (12) mit der Kalibrierkammer (36).

9. Verfahren dem vorhergehenden Anspruch, **dadurch gekennzeichnet, dass** für gleich große Zeitdifferenzen t2 - t1 = t3 - t2 der Enddruck extrapoliert wird als

$$p_{End} = (p2 \times p2 - p_{Kam} \times p2) / (2 \times p2 - p_{Kam} - p3),$$

wobei

p2: Druck in der Folienkammer (12) zu einem Zeitpunkt t2 nach Herstellen der Verbindung zwischen der Folienkammer (12) und der Kalibrierkammer (36),
p3: Druck in der Folienkammer (12) zu einem Zeitpunkt t3 nach dem Zeitpunkt t2 und
t1: der Zeitpunkt, zu dem das Kalibrierventil (34) geöffnet wird.

**Claims**

1. A method for gross leak measurement of an at least partially incompressible test object (18) in a film chamber (12) that comprises at least one flexible wall region and is connected, in a gas-conducting manner, to a pressure sensor (30), a vacuum pump (26) and, by way of a calibration valve (34), to a calibration chamber (36) enclosing a calibration volume (37), comprising the following steps:

   evacuating the film chamber (12) in an empty state without the test object (18);
   measuring a first progression of the pressure within the film chamber (12) after the evacuation is completed;
   connecting, in a gas-conducting manner, the calibration volume (37) to the inner volume of the film chamber (12) during the measurement of the first pressure progression, the pressure being measured before the gas-conducting connection is established, and with the gas-conducting connection established, to the film chamber (12), and the pressure in the calibration chamber (36) prior to the connection to the film chamber (12) being higher or lower than the pressure in the film chamber (12),
   determining the pressure difference $\Delta p_{leer}$ between the pressure measured before the gas-conducting connection is established and the pressure measured with a gas-conducting connection to the film chamber (12), in the case of an empty film chamber (12) comprising no test object (18),
   **characterized by** the steps of:

   locating a test object (18) in the film chamber (12),
   evacuating the film chamber (12) comprising the test object (18) therein,
   measuring a progression of a second pressure in the film chamber (12) comprising the test object (18) therein after the evacuation is completed,
   connecting, in a gas-conducting manner, the calibration volume (37) to the inner volume of the film chamber (12) during the measurement of the second pressure progression, a pressure being measured before the gas-conducting connection is established, and a pressure being measured with the gas-conducting connection to the film chamber (12) being established, and the pressure in the calibration chamber (36) prior to the connection to the film chamber (12) being higher or lower than in the film chamber (12),
   determining the pressure difference $\Delta p_{Prüfling}$ between the pressure measured before the gas-conducting connection is established and the pressure measured with the gas-conducting connection to the film chamber (12) being established, with the test object (18) being contained in the film chamber (12),
   comparing the pressure difference $\Delta p_{leer}$ to the pressure difference $\Delta p_{Prüfling}$, wherein in the case of a test object (18) with a gross leak, the pressure difference $\Delta p_{Prüfling}$ is smaller than the pressure difference $\Delta p_{le}$ in the case of an empty film chamber (12).

2. The method according to claim 1, **characterized in that** the inner volume $V_{Innen}$ of the film chamber (12), comprising the test object (18) therein, is calculated as follows:

$$V_{Innen} = V_{leer}\left( \frac{\Delta p_{leer}\left(p_V - p_{G2}\right)}{\Delta p_{prüfling}\left(p_V - p_{G1}\right)} - 1 \right)$$

or, when $P_{G1}$, $P_{G2} \ll p_v$

$$V_{Innen} \approx V_{leer} \times \left( \frac{\Delta p_{leer}}{\Delta p_{prüfling}} - 1 \right),$$

where

$V_{Innen}$: is the inner volume of the film chamber (12) comprising the test object (18) therein;

$V_{leer}$: is the inner volume of the empty film chamber (12) without the test object (18);

$\Delta p_{leer}$: is the pressure difference between the pressure in the film chamber (12) before connection to the calibration chamber (36) and the pressure in the film chamber after connection to the calibration chamber (36), with an empty film chamber (12);

$\Delta p_{Prüfling}$: is the pressure difference between the pressure in the film chamber (12) before connection to the calibration chamber (36) and the pressure in the film chamber after connection to the calibration chamber (36), when a test object (18) is present in the film chamber (12);

$P_{G1}$: is the final pressure that is present with an empty film chamber (12) after the calibration volume (37) has been connected to the film chamber; and

$P_{G2}$: is the final pressure that is present with a film chamber (12) filled with a test object (18) after the calibration volume (37) has been connected to the film chamber.

3. The method according to any one of the preceding claims, **characterized in that** the inner volume (20) of the empty film chamber (12) without test object (18) is determined by way of a comparative measurement of an empty film chamber (12) to a measurement having a known inner volume $V_{Kal}$, using the following relationship:

$$V_{leer} = \left( \frac{V_{kal}}{\left( \frac{\Delta p_{leer}(p_V - p_{G2})}{\Delta p_{prüfling}(p_V - p_{G1})} - 1 \right)} \right),$$

or when $P_{G1}$, $p_{G2} \ll p_v$

$$V_{leer} = \left( \frac{V_{kal}}{\left( \frac{\Delta p_{leer}}{\Delta p_{prüfling}} - 1 \right)} \right)$$

where

$V_{Kal}$: is a known calibration volume (37).

4. The method according to the preceding claim, **characterized in that** the magnitude of the known calibration volume (37) is between 1/5 and 1/20 of the inner volume (20) of the empty film chamber $V_{leer}$.

5. The method according to any one of the preceding claims, **characterized in that** the calibration chamber (36) is provided with a test leak (40) having a known leakage rate, and the inner volume (20) of the film chamber (12) is ascertained taking into consideration the pressure increase that develops after the film chamber (12) has been connected to the calibration volume (37).

6. The method according to any one of the preceding claims, **characterized in that** the respective pressure differences between the pressure before the gas-conducting connection is established between the film chamber (12) and the calibration chamber (36), and the final pressure inside the film chamber (12) present with a gas-conducting connection between the film chamber (12) and the calibration chamber (36) are considered.

7. The method according to the preceding claim, **characterized in that** the final pressure that is present inside the film chamber (12) with a gas-conducting connection between the film chamber and the calibration chamber (36) is extrapolated based on an exponential function of the resulting pressure progression, which exponential function has at least two pressure values measured by way of the pressure sensor (30).

8. The method according to the preceding claim, **characterized in that** the following formula is used for the extrapolation of the developing final pressure:

$$p(t) = (p_{End} - p_{Kam}) \times (1 - e^{-t/Tau}) + p_{Kam},$$

where

p(t): is the instantaneous pressure at the point in time t;

$p_{Kam}$: is the pressure in the film chamber (12) before the gas-conducting connection between the film chamber and the calibration chamber (36) is established;

$p_{End}$: is the final pressure in the film chamber (12) after the film chamber (12) and the calibration chamber (36) have been connected,

t: is the time; and

Tau: is the time constant of the pressure settling process after the film chamber (12) has been connected to the calibration chamber (36).

9. The method according to the preceding claim, **characterized in that**, for equal time differences t2 - t1 = t3 - t2, the final pressure is extrapolated as follows:

$$p_{End} = (p2 \times p2 - p_{Kam} \times p2) / (2 \times p2 - p_{Kam} - p3),$$

where

p2: is the pressure in the film chamber (12) at a point in time t2 after the connection between the film chamber and the calibration chamber (36) has been established;

p3: is the pressure in the film chamber (12) at a point in time t3 after the point in time t2; and

t1: is the point in time at which the calibration valve (34) is opened.

**Revendications**

1. Procédé de mesure approximative de fuite d'une éprouvette (18) au moins partiellement incompressible dans une chambre à film (12) présentant au moins une zone de paroi flexible, qui est raccordée par conduction de gaz à un capteur de pression (30), à une pompe à vide (26) et, via une soupape d'étalonnage (34), à une chambre d'étalonnage (36) comportant un certain volume d'étalonnage (37), comprenant les étapes consistant à :

faire le vide dans la chambre à film (12) dans un état vide, sans éprouvette (18),

mesurer une première évolution de pression au sein de la chambre à film (12) après la fin de l'évacuation,

raccorder par conduction de gaz le volume d'étalonnage (37) au volume interne de la chambre à film (12) pendant la mesure de la première évolution de pression, à l'occasion de quoi sont mesurées une pression avant la réalisation du raccordement par conduction de gaz, et une pression lors du raccordement par conduction de gaz à la chambre à film (12), et à l'occasion de quoi la pression dans la chambre d'étalonnage (36) est supérieure ou

inférieure à la pression dans la chambre à film (12) avant le raccordement à la chambre à film,

déterminer la différence de pression $\Delta_{pleer}$ entre la pression mesurée avant la réalisation du raccordement par conduction de gaz et la pression mesurée lors du raccordement par conduction de gaz à la chambre à film (12) dans le cas d'une chambre à film (12) vide, sans éprouvette (18),

**caractérisé par** les étapes suivantes :

introduction d'une éprouvette (18) dans la chambre à film (12),

réalisation du vide dans la chambre à film (12) contenant l'éprouvette (18),

mesure d'une deuxième évolution de pression au sein de la chambre à film (12) contenant l'éprouvette (18) après la fin de l'évacuation,

raccordement par conduction de gaz du volume d'étalonnage (37) au volume interne de la chambre à film (12) pendant la mesure de la deuxième évolution de pression, à l'occasion de quoi sont mesurées une pression avant la réalisation du raccordement par conduction de gaz, et une pression lors du raccordement par conduction de gaz à la chambre à film (12), et à l'occasion de quoi la pression dans la chambre d'étalonnage (36) est supérieure ou

inférieure à la pression dans la chambre à film (12) avant le raccordement à la chambre à film,

déterminer la différence de pression $\Delta_{\text{pPrüfling}}$ entre la pression mesurée avant la réalisation du raccordement par conduction de gaz et la pression mesurée lors du raccordement par conduction de gaz à la chambre à film (12) dans le cas d'une éprouvette (18) contenue dans la chambre à film (12),

comparer la différence de pression $\Delta_{\text{pleer}}$ avec la différence de pression $\Delta_{\text{pPrüfiing}}$, à l'occasion de quoi, dans le cas d'une éprouvette (18) présentant une fuite grossière, la différence de pression $\Delta_{\text{pPrüfiing}}$ est plus petite que la différence de pression $\Delta_{\text{pleer}}$ dans le cas d'une chambre à film vide.

2. Procédé selon la revendication 1, **caractérisé en ce que** le volume interne $V_{\text{Innen}}$ de la chambre à film (12) contenant l'éprouvette (18) est calculé à partir de

$$V_{Innen} = V_{leer}\left(\frac{\Delta p_{leer}(p_V - p_{G2})}{\Delta p_{prüfling}(p_V - p_{G1})} - 1\right)$$

ou, lorsque $p_{G1}, p_{G2} \ll p_V$

$$V_{Innen} \approx V_{leer} \times \left(\frac{\Delta p_{leer}}{\Delta p_{prüfling}} - 1\right),$$

où

$V_{\text{Innen}}$ : volume interne de la chambre à film (12) contenant l'éprouvette (18),

$V_{\text{leer}}$ : volume interne de la chambre à film (12) vide, sans éprouvette (18),

$\Delta_{\text{pleer}}$ : différence de pression entre la pression dans la chambre à film (12) avant le raccordement à la chambre d'étalonnage (36) et la pression dans la chambre à film après le raccordement à la chambre d'étalonnage (36) lorsque la chambre à vide (12) est vide,

$\Delta_{\text{pPrüfling}}$ : différence de pression entre la pression dans la chambre à film (12) avant le raccordement à la chambre d'étalonnage (36) et la pression dans la chambre à film après le raccordement à la chambre d'étalonnage (36) lorsque la chambre à film (12) contient l'éprouvette (18),

$p_{G1}$ : pression finale qui se règle pour une chambre à film (12) vide après le raccordement du volume d'étalonnage (37) à la chambre à film, et

$p_{G2}$ : pression finale qui se règle pour une chambre à film (12) remplie d'une éprouvette (18) après le raccordement du volume d'étalonnage (37) à la chambre à film.

3. Procédé selon l'une des revendications précédentes, **caractérisé en ce que** le volume interne (20) de la chambre à film (12) vide, sans éprouvette (18), est déterminé par mesure de comparaison entre une chambre à film (12) vide et une mesure avec un volume interne connu $V_{\text{Kal}}$ selon la relation suivante :

$$V_{leer} = \left( \cfrac{V_{kal}}{\left( \cfrac{\Delta p_{leer}(p_V - p_{G2})}{\Delta p_{prüfling}(p_V - p_{G1})} - 1 \right)} \right),$$

ou, lorsque $p_{G1}, p_{G2} \ll p_V$

$$V_{leer} = \left( \cfrac{V_{kal}}{\left( \cfrac{\Delta p_{leer}}{\Delta p_{prüfling}} - 1 \right)} \right)$$

où

   $V_{Kal}$: est un volume d'étalonnage (37) connu.

4. Procédé selon la revendication précédente, **caractérisé en ce que** la valeur du volume d'étalonnage (37) connu est comprise entre 1/5 et 1/20 du volume interne (20) de la chambre à film vide $V_{leer}$.

5. Procédé selon l'une des revendications précédentes, **caractérisé en ce que** la chambre d'étalonnage (36) est dotée d'une fuite d'essai (40) ayant un débit de fuite prédéfini, et **en ce que** le volume interne (20) de la chambre à film (12) est déterminé en tenant compte de l'augmentation de pression qui se règle après le raccordement de la chambre à film (12) au volume d'étalonnage (37).

6. Procédé selon l'une des revendications précédentes, **caractérisé en ce que** l'on examine respectivement les différences de pression entre la pression avant la réalisation du raccordement par conduction de gaz entre la chambre à film (12) et la chambre d'étalonnage (36), et la pression finale qui se règle au sein de la chambre à film (12) lors du raccordement par conduction de gaz entre la chambre à film (12) et la chambre d'étalonnage (36).

7. Procédé selon la revendication précédente, **caractérisé en ce que** la pression finale qui se règle au sein de la chambre à film (12) lors du raccordement par conduction de gaz entre la chambre à film (12) et la chambre d'étalonnage (36) est extrapolée au moyen d'une fonction exponentielle de l'évolution de pression qui se règle, et qui présente au moins deux valeurs de mesure mesurées avec le capteur de pression (30).

8. Procédé selon la revendication précédente, **caractérisé en ce que** l'on utilise, pour l'extrapolation de la pression finale qui se règle, la formule

$$p(t) = (p_{End} - p_{Kam}) \times (1 - e^{-t/Tau}) + p_{Kam},$$

où

   $p(t)$ : pression instantanée au moment t,
   $p_{Kam}$ : pression dans la chambre à film (12) avant la réalisation du raccordement par conduction de gaz entre la chambre à film (12) et la chambre d'étalonnage (36),
   $p_{End}$ : pression finale dans la chambre à film (12) après le raccordement de la chambre à film (12) et de la chambre d'étalonnage (36),

t : temps, et

Tau : constante de temps du procédé d'oscillation de pression après le raccordement de la chambre à film (12) à la chambre d'étalonnage (36).

9. Procédé selon la revendication précédente, **caractérisé en ce que**, pour des différences de temps de même taille t2 - t1 = t3 - t2, la pression finale est extrapolée en tant que

$$p_{End} = (p2 \times p2 - p_{Kam} \times p2) / (2 \times p2 - p_{Kam} - p3),$$

où

$p_2$ : pression dans la chambre à film (12) à un moment t2 après réalisation du raccordement entre la chambre à film (12) et la chambre d'étalonnage (36),

$p_3$ : pression dans la chambre à film (12) à un moment t3 après le moment $t_2$, et

$t_1$ : moment où la soupape d'étalonnage (34) est ouverte.

**Fig.1**

**Fig.2**

20  18  14

16

12

30  28

22

32

24  34

26  37  36

**Fig.3**

Druck p

Zeit t

**Fig.4**

**Fig.5**

**Fig.6**

**Fig.7**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102014219481
- US 6082184 A

- US 2001003917 A1
- US 2006277975 A1